Europäisches Patentamt

European Patent Office

Office européen des brevets

(11) Publication number : **0 631 155 A1**

(12) **EUROPEAN PATENT APPLICATION**

(21) Application number : **94304481.8**

(22) Date of filing : **20.06.94**

(51) Int. Cl.⁵ : **G02B 5/04**

(30) Priority : **24.06.93 GB 9313061**

(43) Date of publication of application :
**28.12.94 Bulletin 94/52**

(84) Designated Contracting States :
**DE FR IT**

(71) Applicant : **GEC-MARCONI LIMITED**
**The Grove,**
**Warren Lane**
**Stanmore, Middlesex HA7 4LY (GB)**

(72) Inventor : **Peck, Roger Jeremy**
**17 Hoyners,**
**Danbury**
**Chelmsford, Essex CM3 4RL (GB)**

(74) Representative : **Cockayne, Gillian**
**GEC Patent Department**
**Waterhouse Lane**
**Chelmsford, Essex CM1 2QX (GB)**

(54) **Prism assembly.**

(57)    A prism assembly, particularly for use in deflecting the sightline of an imaging device, comprises four prisms each having a pair of orthogonal side faces (ABED, ACFD) meeting at a roof edge (AD). The prisms are clustered together with the roof edges (AD) lying parallel and adjacent to each other. Each prism further includes a pair of end faces (ABC, DEF) through which light rays can enter and exit the respective prism. The angles α, β between the roof edge (AD) of each prism and each of the adjacent edges (AB, ED, AC, FD) of each of the respective prisms end faces (ABC, DEF) are less than 90°.

Fig 2

EP 0 631 155 A1

Jouve, 18, rue Saint-Denis, 75001 PARIS

This invention relates to a prism assembly, and in particular to a prism assembly for use in steering the sightline of an imaging device.

There is a need for apparatus which can be mounted inline with a TV camera, for example, and which can be moved so as to enable the camera to view a large area. The need for such apparatus arises particularly with under aircraft pods where, for aerodynamic reasons, it is desirable to keep the cross section of the pod as small as possible It has been proposed to use a plane mirror located in front of the camera which is rotatable about a pair of orthogonal axes. Such an arrangement can have an unrestricted field of regard in azimuth, but in elevation the angle is usually limited by the mirror size and is typically less than ± 50°. Furthermore using such a mirror it is difficult to see straight ahead unless additional fold mirrors are used, which reduce compactness.

Another arrangement which has been proposed comprises a pair of so-called Risley prisms which are essentially axially aligned wedge shaped prisms each having a face formed at an oblique angle. Such an arrangement suffers from distortion which increases with sightline deviation. The field of regard is accordingly limited by distortion to about 60° off axis in any direction. Furthermore, sightline deviation is a highly non-linear function of prism movement which complicates the movement control mechanism.

This invention provides a prism assembly comprising four prisms each having a pair of orthogonal side faces meeting at a roof edge, the prisms being clustered together with the roof edges lying parallel and adjacent to each other, each prism further having an end face through which light rays enter the respective prism before reflecting from each of the orthogonal side faces and exiting from a further end face of the respective prism, the angles between the roof edge of each prism and each of the adjacent edges of each of the respective prisms end faces being less than 90°.

By way of contrast to the above mentioned systems a prism assembly according to the invention can provide a full hemi-spherical field of regard - i.e. at least ± 90° in both azimuth and elevation. Furthermore, with a reduced ratio of usable beam size to prism assembly size, the invention can provide a complete spherical field.

In order that the invention may be better understood an embodiment thereof will now be described by way of example with reference to the accompanying diagrammatic drawings in which;

Figure 1 is a schematic perspective view of an assembly together with an imager;

Figure 2 is a perspective view of a prism forming part of the assembly shown in Figure 1;

Figure 3a is a perspective view of a prism assembly;

Figures 3b and 3c are views in the direction of the respective arrows shown in Figure 3a; and

Figures 4a to 4c are the same as Figures 3a to 3c, except that the assembly has been moved so as to view a scene at a different angle.

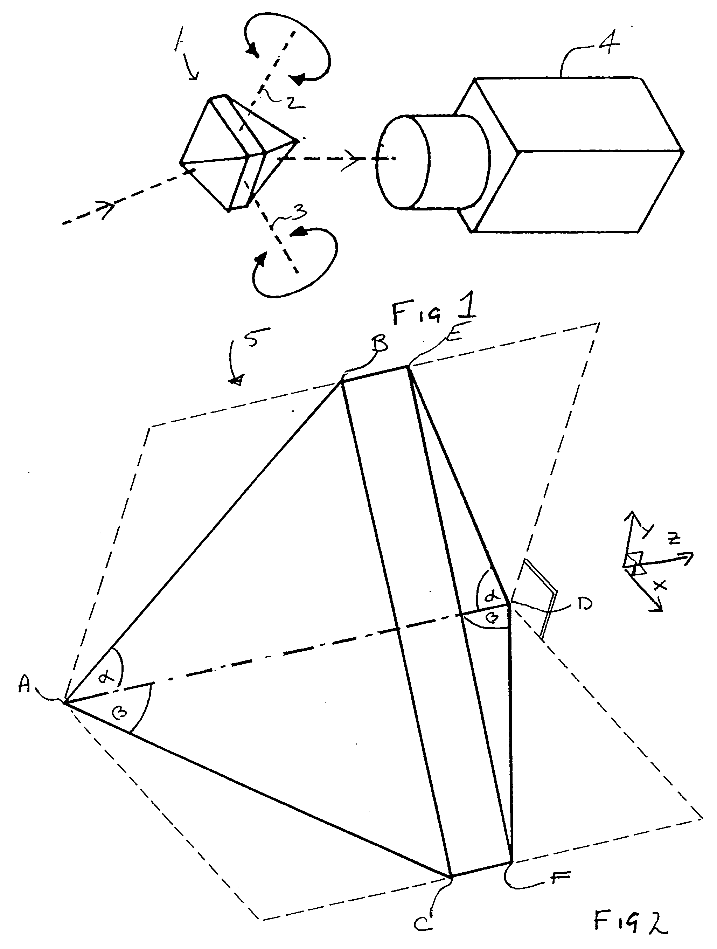

A prism assembly 1 is rotatably mounted about a pair of orthogonal axes 2, 3 such as to provide an image of a scene to an imaging device 4 such as a TV camera. Each of the prisms 5, as best seen in Figure 2, comprises a pair of orthogonal side faces ABED and ACFD which meet one another at a roof edge AD. For maximum possible sightline deflection these two surfaces can have a reflective coating to ensure that reflection occurs at all incidence angles. For lesser degrees of sightline deflection total internal reflection can be relied upon and coating is not necessary. Each prism further includes two end faces ABC and DEF by which light rays enter and exit the prism. Angles $\alpha$ - i.e. the included angle between the roof edge AD and each of the adjacent sides AB and DE of side face ABED - are the same and are less than 90°, preferably about 60°. Angles $\beta$ - i.e. the angle between the roof edge AD and each of the adjacent edges AC and DF of the other side face ACFD - also have a value of less than 90° and are preferably the same as angle $\alpha$. Face CBEF plays no part in the refraction process and be omitted in alternative embodiments.

The fact that both angles $\alpha$ and $\beta$ are less than 90° ensures that rays entering the prism at shallow angles relative to the roof edge AD are refracted towards the respective reflecting surfaces ABED, ACFD. Because the angles $\alpha$ are equal, as are the angles $\beta$, this ensures that if the optical path through the prism is "unfolded" about the reflecting surfaces ABED and ACFD, then the entrance and exit faces ABC and DEF appear parallel. The angle through which the light ray is refracted on leaving the prism is then equal and opposite to that which it underwent on entering the prism. Using the co-ordinate system shown in Figure 2, the direction of a ray entering or leaving the prism can be resolved in terms of X, Y and Z components, usually expressed as the direction cosines i, j and k respectively. Within the prism's usable range the directions of a ray on entry and exit are related by :-

$$i_{out} = -i_{in}, \ j_{out} = -j_{in}, \ k_{out} = k_{in}.$$

This relationship is unaffected by rotation of the prism about the Z axis and therefore holds for each of the four prisms in the final assembly.

Four prisms 5 of the type shown in Figure 2 are assembled such that the roof edges AD of each respective prism are parallel and adjacent to one another. The edges AD of each prism have the same length and the angles $\alpha$ and $\beta$ of adjacent pairs of prism faces are the same, which ensures that adjacent prism faces can fit together.

If the reflecting surfaces ABED and ACFD have a reflective coating then the prisms can be cemented together by these faces. Otherwise they must be separated by a small air gap.

As shown in Figure 1, the assembly 1 of four prisms 5 can be rotated in azimuth and in elevation about axes 2, 3 to vary the direction and magnitude of the sightline deflection. Each of the four prisms can deflect a large ray bundle through a particular range of angles, but outside this range can only cope with a smaller ray bundle. By appropriate choice of the axes of rotation, the system pupil is divided between the four prisms in such a way that the larger sections are transmitted through those prisms which are capable of accommodating them, and smaller sections are presented to the others. In this way the prism assembly can provide a much wider range of sightline deflection than would be achievable from a single prism. Depending on the direction and degree of sightline deflection, the pupil may be contained within a single prism or be divided amongst two, three, or all four of them.

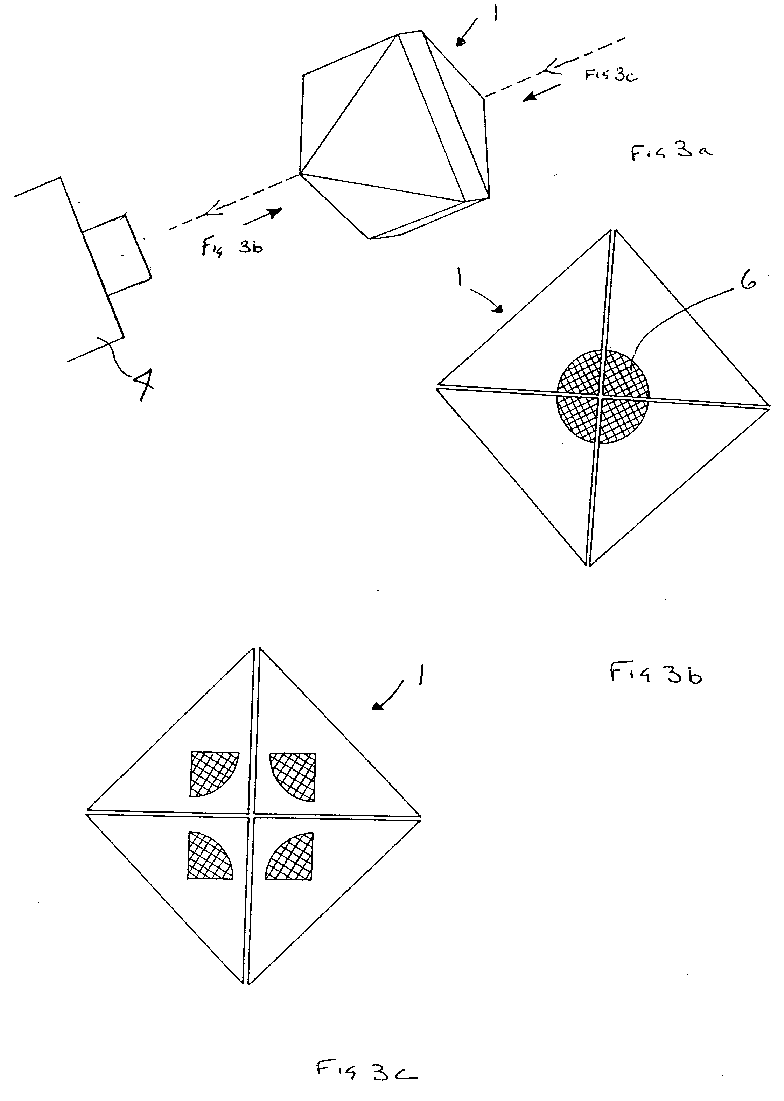

Figure 3a shows an assembly in the zero deflection straight ahead position and Figures 3b and 3c show the corresponding distribution of the pupil 6 on exit from the prism and on entry respectively. It can be seen that the pupil 6 is divided equally between the four prisms and that each pupil section is rotated through 180°.

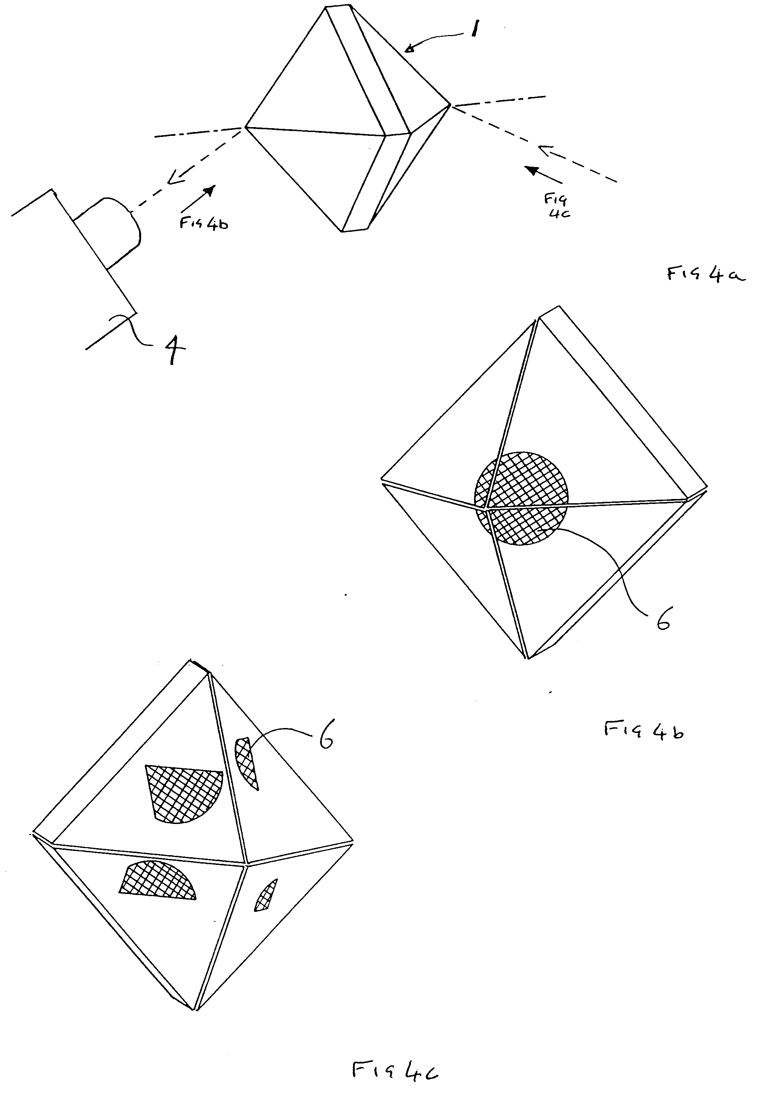

Figure 4a is the same as Figure 3a except that the prism assembly 1 is rotated to give a large sightline deflection. The pupil 6 is now divided unequally between the four prisms. Each of the pupil sections are inverted (180° rotation) in their passage through the prisms and their relative positions on the input side of the prism vary as the assembly is rotated. However, the directions of the rays entering each of the four sections are always the same as each other, and so objects at infinity focus are correctly imaged.

Although the assembly has been described as being used at the input to a receiver such as an imager or camera, it is to be understood that it can be used at the output of a transmitter such as a laser. The mounting axes 2, 3 need not be orthogonal to each other and could be placed in different positions from those shown; for example, an inner axis perpendicular to the camera sightline, and an outer axis giving rotation about the camera sightline.

**Claims**

1. A prism assembly comprising four prisms (5) each having a pair of orthogonal side faces (ABED, ACFD) meeting at a roof edge (AD), the prisms (5) being clustered together with the roof edges (AD) lying parallel and adjacent to each other, each prism having an end face (ABC) through which light rays enter the respective prism before reflecting from each of the orthogonal side faces (ABED, ACFD) and exiting from a further end face (DEF) of the respective prism, the angles ($\alpha$, $\beta$) between the roof edge (AD) of each prism and each of the adjacent edges (AB, ED, AC, FD) of each of the respective prisms end faces (ABC, DEF) being less than 90°.

2. A prism assembly according to claim 1 in which the two angles ($\alpha$ or $\beta$) between the roof edge (AD) and each adjacent edge (AB, ED or AC, FD) of one of the side faces (ABED or ACFD) are equal to one another.

3. A prism assembly according to claim 1 or 2 in which the angles ($\alpha$, $\beta$) between the roof edge (AD) and each adjacent edge (AB, ED, AC, FD) of both side faces (ABED, ACFD) are all equal.

4. A prism assembly according to any preceding claim in which the side faces (ABED, ACFD) have a reflective coating.

5. A prism assembly according to any of claims 1 to 3 in which an air gap is provided between adjacent side faces (ABED, ACFD).

6. A prism assembly according to any preceding claim mounted in a support for rotating the assembly about two axes (2, 3).

7. A prism assembly according to claim 6 mounted for deflecting the sightline of an imaging device (4).

Fig 1

Fig 2

Fig 3a

Fig 3b

Fig 3c

Fig 4a

Fig 4b

Fig 4c

**European Patent Office**

# EUROPEAN SEARCH REPORT

Application Number

EP 94 30 4481

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DE-A-40 33 842 (ASAHI KOGAKU KOGYO) * column 3 - column 5; figures 1-7 * | 1-3 | G02B5/04 |
| Y | | 1-7 | |
| Y | FR-A-2 135 181 (MBB) * the whole document * | 1-3,5-7 | |
| Y | GB-A-754 590 (TECHNICOLOR MOTION PICTURE) * page 2; figures 1-6 * | 4 | |
| | | | **TECHNICAL FIELDS SEARCHED** (Int.Cl.5) |
| | | | G02B |

The present search report has been drawn up for all claims

| Place of search | Date of completion of the search | Examiner |
|---|---|---|
| THE HAGUE | 22 August 1994 | Malic, K |